# FASCICULE DE BREVET EUROPEEN

(11) **EP 4 547 743 B1**
(45) Date de publication et mention de la délivrance du brevet: **11.03.2026**
(21) Numéro de dépôt: 23735317.2
(22) Date de dépôt: 27.06.2023
(51) Int. Cl.: C08J 11/04, C08J 11/10

(54) **PROCÉDÉ DE PRÉPARATION D'UN ÉLÉMENT COMPRENANT DU POLYÉTHYLÈNE TÉRÉPHTALATE EN VUE DE SA DEPOLYMERISATION**
VERFAHREN ZUR HERSTELLUNG EINES ELEMENTS MIT POLYETHYLENTEREPHTHALAT ZUR DEPOLYMERISATION
PROCESS FOR THE PREPARATION OF AN ELEMENT COMPRISING POLYETHYLENE TEREPHTHALATE FOR DEPOLYMERIZATION

(30) Priorité: 30.06.2022 FR 2206632
(43) Date de publication de la demande: 07.05.2025
(73) Titulaire: COMPAGNIE GENERALE DES ETABLISSEMENTS MICHELIN, 63000 Clermont-Ferrand (FR)
(72) Inventeur: DAUMAS, Franck, 63040 CLERMONT-FERRAND CEDEX 09 (FR); LECLERC, Christophe, 63040 CLERMONT-FERRAND CEDEX 09 (FR)
(74) Mandataire: M.F.P. Michelin
(86) Numéro de dépôt international: PCT/EP2023/067401
(87) Numéro de publication internationale: WO 2024/003014

(56) Documents cités:
- US-A1- 2019 218 360

## Description

### Domaine technique de l'invention

La présente invention est relative au domaine des procédés de traitement, en particulier de préparation en vue de leur dépolymérisation, des éléments comprenant du polyéthylène téréphtalate.

### Art antérieur

Le polyéthylène téréphtalate, ou poly(téréphthalate d'éthylène) est un polymère très largement utilisé, notamment dans l'industrie de l'emballage et du textile, ou comme élément de renforcement dans les bandages pneumatiques. Son recyclage est donc un enjeu majeur.

À cette fin, différentes voies sont possibles :
- Le recyclage dit mécanique permet de refaire des objets en PET à partir de copeaux de PET issus d'un tri, déchiquetés et fondus, mais avec des propriétés mécaniques inférieures compte tenu de la présence d'éléments polluant et de la perte de masse moléculaire. Le PET issu de ce recyclage n'est donc pas adapté pour être réutilisé dans des applications pour lesquelles de hauts niveaux de performance sont requis :
- Le recyclage dit chimique vise à revenir aux monomères (acide téréphtalique, éthylène glycol) et donc, après purification, permet de synthétiser de nouveau un polymère adapté aux applications visées. Parmi les méthodes de recyclage, on peut distinguer les méthodes mettant en œuvre un solvant, avec des conditions opératoires (pression, température) relativement sévères, donc avec un impact environnemental et un coût élevé, et les méthodes catalysées par effet chimique (enzyme ou autre catalyseur) ou physique (microonde).

Les dépolymérisations de type enzymatique offrent l'avantage d'être sélectives, et peuvent donc être opérées même en présence d'autres matières plastiques, et de nécessiter des conditions douces, dans de l'eau, à un pH allant généralement de 6 à 8 et une température de l'ordre de 20 à 80°C. En revanche, le PET doit être faiblement cristallin pour que les enzymes puissent s'adsorber correctement sur les molécules de PET.

Le document WO2017/198786 décrit un procédé comprenant une étape d'amorphisation d'un élément en PET suivi d'une étape de dépolymérisation. L'amorphisation est réalisée dans une extrudeuse bi-vis au sein de laquelle le PET est mis en pression et en température. Bien qu'efficace, ce mode d'opération peut se révéler mal adapté à des éléments en PET pollués de composés tels que de la gomme, laquelle va se dégrader dans l'extrudeuse et émettre des fumées. L'extrudeuse bi-vis est par ailleurs un équipement coûteux.

Ce document cite également d'autres possibilités pour réduire la cristallinité des éléments en PET tels que dans un réacteur, par atomisation, par solubilisation dans un solvant, par traitement plasma, par irradiation atomique ou par attrition mécanique cryogénique sans plus de précision.

Le traitement plasma des éléments de PET, notamment des éléments de renforts pour bandages pneumatiques, a déjà été mis en œuvre par le passé en vue d'améliorer l'adhésion du renfort à une matrice élastomérique. Le document FR2996806 présente un tel traitement dont la problématique est différente car il s'agit de traiter le renfort à grande vitesse, compatible avec les procédés de calandrage utilisés dans l'industrie pneumatique, et sur une couche très superficielle, de l'ordre de 0,5 µm à 1 µm, l'adhésion à la matrice élastomérique étant un phénomène de surface.

Poursuivant ses recherches, la demanderesse a découvert que des conditions particulières d'un traitement plasma permettaient d'obtenir un élément PET particulièrement apte à être dépolymérisé, en particulier dans une étape de dépolymérisation enzymatique.

### Description détaillée de l'invention

L'invention concerne un procédé de préparation d'un élément en polyéthylène téréphtalate, dit « PET », pour sa dépolymérisation comprenant au moins une étape d'amorphisation dans laquelle la surface de l'élément PET est mise au contact d'un plasma, suivie d'une étape de dépolymérisation de l'élément PET, la puissance apparente du plasma Pₐₚₚ=P×d/(v×h), avec P la puissance du plasma en Watt, d le diamètre du faisceau de plasma mesuré au niveau de la surface de l'élément PET en mètre, v la vitesse de défilement de l'élément PET par rapport au flux de plasma en mètre/minute et h la distance entre la buse plasma et la surface l'élément PET en mètre étant telle que 100×e < Pₐₚₚ ≤ 330×e, avec e l'épaisseur de l'élément PET en millimètre.

### Définitions

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### Élément en polyéthylène téréphtalate

L'élément en polyéthylène téréphtalate peut être tout élément comprenant du polyéthylène téréphtalate. Cet élément présente une épaisseur e. Le polyéthylène téréphtalate, ou poly(téréphthalate d'éthylène), abrégé par la suite sous l'acronyme « PET », est un polymère de type polyester saturé thermoplastique bien connu de l'homme du métier.

Par épaisseur de l'élément PET, on entend la plus petite dimension mesurée dans un plan de coupe perpendiculaire à la direction principale dudit élément, la direction principale correspondant à la direction selon laquelle s'étend l'élément selon sa plus grande longueur.

Ainsi, pour un fil de section circulaire, l'épaisseur e correspondra au diamètre du fil. Pour un ruban ou un film, dont la section est rectangulaire, l'épaisseur e correspondra à la largeur de la section rectangulaire.

Dans un mode de réalisation, l'élément PET est un monofilament, ou filament élémentaire. Chaque monofilament présente, de préférence, un diamètre inférieur ou égal à 50 µm.

Dans un mode de réalisation, l'élément PET comprend une ou plusieurs fibres multifilamentaires.

Une fibre multifilamentaire est constituée de plusieurs monofilaments ou filaments élémentaires éventuellement entremêlés les uns avec les autres. Chaque fibre comprend entre 50 et 2000 monofilaments.

Dans une variante, l'élément PET comprend un ou plusieurs retors de fibres multifilamentaires. Le retors est obtenu par retordage de plusieurs surtors, chaque surtors étant obtenu par surtordage d'une fibre multifilamentaire.

Dans une autre variante, l'élément PET comprend un surtors d'une fibre multifilamentaire.

Dans un mode de réalisation, l'élément PET comprend un tissu de fibres. Un tel tissu comprend, de préférence, plusieurs retors de fibres assemblés ensemble par tissage au moyen d'un ou plusieurs fils de trame. En variante, le tissu de fibres comprend deux couches de fibres, les fibres de chaque couche s'étendant selon des directions différentes d'une couche à l'autre. Dans une autre variante, le tissu de fibres comprend des fibres assemblées aléatoirement et solidarisées par friction, cohésion ou adhésion (tissu dit « non-tissé », ou « intissé » bien connu de l'homme du métier), l'épaisseur de chaque fibre étant inférieure à 100 µm, de préférence inférieure à 50 µm.

Dans un autre mode de réalisation, l'élément PET comprend un film. Un film désigne notamment toute couche fine, dont le rapport de l'épaisseur sur la plus petite des autres dimensions est inférieur à 0,1. De préférence, l'épaisseur du film est de préférence comprise entre 0,05 et 1 mm, plus préférentiellement entre 0,1 et 0,7 mm. Par exemple, des épaisseurs de film de 0,20 à 0,60 mm se sont révélées tout à fait satisfaisantes pour la plupart des utilisations.

Dans un mode de réalisation, la fibre multifilamentaire, le tissu de fibres, l'intissé, le film ou le monofilament est intégralement en un matériau choisi parmi le polyéthylène téréphtalate et le polyéthylène naphtalate, de préférence est intégralement en polyéthylène téréphtalate.

Dans un autre mode de réalisation, la fibre multifilamentaire, le tissu de fibres, l'intissé, le film ou le monofilament comprend une première partie en polyester et une deuxième partie en un matériau différent de celui de la première partie.

Par matériau différent, on entend un matériau non identique à celui de la première partie. Ainsi, par exemple, un polyester de nature différente, ou présentant un taux de cristallinité différent de celui de la première partie est un matériau différent.

De préférence, le matériau de la première partie est choisi parmi le polyéthylène téréphtalate et le polyéthylène naphtalate, de préférence est le polyéthylène téréphtalate.

De préférence, le matériau de la deuxième partie est choisi parmi un polyester, par exemple le polyéthylène téréphtalate (PET) le polyéthylène naphthalate (PEN), le polybutylène téréphthalate (PBT), le polybutylène naphthalate (PBN), le polypropylène téréphthalate (PPT) ou le polypropylène naphthalate (PPN), un polyamide, par exemple un polyamide aromatique, une polycétone, une polyoléfine, une cellulose, une fibre naturelle par exemple le coton ou la laine, ou un mélange de ces matériaux.

Le matériau de la deuxième partie peut aussi être un autre composant organique ou non organique, tel qu'un polyurethane, une silicone, un polyvinyle de chlorure, une résine acrylique, une résine phénolique, un élastomère caoutchoutique renforcé ou non.

Le matériau de la deuxième partie peut être constitué d'une formulation avec des additifs organique ou inorganique (plastifiants, agent de réticulation, agents de protection).

### Étape d'amorphisation de félément PET

Le procédé de préparation selon l'invention comprend une étape d'amorphisation de l'élément PET dans lequel la surface de l'élément PET est mise au contact d'un plasma.

Un plasma permet de générer, à partir d'un gaz soumis à une tension électrique, un flux thermique comprenant des molécules à l'état gazeux, des ions et des électrons, le contrôle de la décharge électrique permettant de contrôler l'ionisation du gaz et sa température en sortie de torche. Avantageusement, le plasma est du type plasma froid. Un tel plasma, également appelé plasma hors équilibre, est tel que la température provient majoritairement du mouvement des électrons. Un plasma froid doit être distingué d'un plasma chaud, également appelé plasma thermique dans lequel les électrons, mais aussi les ions confèrent à ce plasma certaines propriétés, notamment thermiques, différentes de celles du plasma froid.

Le plasma est généré à partir d'un gaz comprimé. Par comprimé, on entend que le gaz est à une pression supérieure à la pression atmosphérique préalablement à la génération du plasma, la pression à laquelle le gaz est comprimé étant un moyen simple de gérer le débit de plasma atmosphérique. L'homme du métier ajuste sans peine la pression du gaz en fonction de l'équipement de génération de plasma et du débit de plasma désiré.

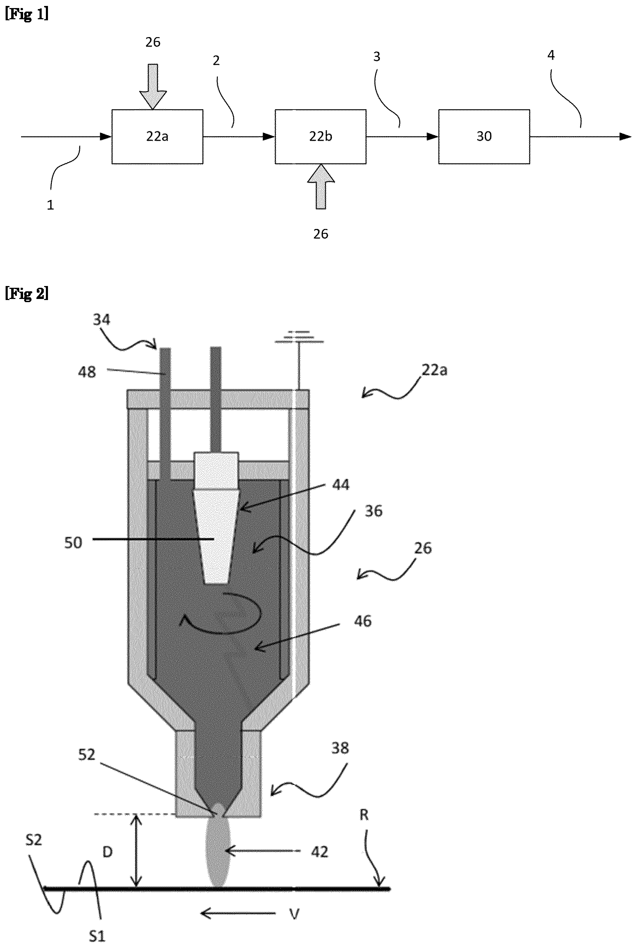

[Fig.1] La figure 1 est une représentation schématique d'un procédé selon l'invention. Un élément PET 1 est mise au contact d'un plasma sur chacune de ses faces dans deux dispositifs 22a, 22b de génération d'un flux de plasma. L'élément PET traité 3 alimente ensuite une étape de dépolymérisation enzymatique 20 afin de produire un effluent comprenant notamment de l'acide téréphthalique et ou de l'éthylène glycol.

Chaque dispositif 22a, 22b comprend une torche à plasma 26 illustrée en détails sur la figure 2. Chaque dispositif 22a, 22b est destiné à traiter respectivement chaque surface de l'élément PET.

Pour la mise en contact de l'élément PET avec le plasma, on utilise de préférence au moins deux torches génératrices de plasma, placées de part et d'autre de l'élément PET. Préférentiellement, les torches sont placées de manière à ne pas être en vis-à-vis. Le placement des torches autour de l'élément PET est destiné à s'assurer que l'ensemble de la surface de l'élément PET est mis en contact avec le plasma. Le nombre total de torches peut donc être ajusté en fonction de contraintes géométriques telles que la forme de l'élément PET ou des puissances individuelles de chaque torche.

[Fig.2] On a représenté sur la figure 2 le dispositif 22a de génération d'un flux de plasma, ici une torche à plasma 26 commercialisé par la société Plasmatreat GmbH. Le dispositif 22b est identique au dispositif 22a. Le dispositif 22a est alimenté par un courant alternatif de tension inférieure à 360 V et de fréquence comprise entre 15 et 25 kHz pour une puissance consommée de 1000W.

Le dispositif 22a comprend des moyens 34 d'alimentation en gaz d'une chambre 36 de génération du flux plasma ainsi que des moyens 38 de sortie du plasma généré dans la chambre 36 sous la forme d'un flux 42 de plasma, ici un jet de plasma. Le dispositif 22a comprend également des moyens 44 de génération d'un arc électrique rotatif 46 dans la chambre 36.

Les moyens d'alimentation 34 comprennent un conduit 48 d'entrée du gaz dans la chambre 36. Les moyens de génération 44 de l'arc électrique comprennent une électrode 50. Les moyens de sortie 38 comprennent un orifice 52 de sortie du flux de plasma 42.

La mise en contact de l'élément PET avec le plasma se fait à pression atmosphérique.

L'utilisation d'un plasma à pression atmosphérique permet la mise en place d'une installation industrielle relativement simple et peu coûteuse contrairement à un procédé nécessitant l'utilisation d'un plasma sous pression réduite associé à la mise en place d'une chambre dépressurisée.

Le flux 42 est obtenu à partir d'un gaz comprenant au moins un composant oxydant. Par composant oxydant, on entend tout composant susceptible d'augmenter le degré d'oxydation des fonctions chimiques présentes dans le polyester.

Avantageusement, le composant oxydant est choisi parmi le dioxyde de carbone (CO2), le monoxyde de carbone (CO), le sulfure d'hydrogène (H2S), le sulfure de carbone (CS2), le dioxygène (O2), l'azote (N2), le chlore (C12). l'ammoniac (NH3) et un mélange de ces composants. De préférence, le composant oxydant est choisi parmi le dioxygène (O2), l'azote (N2) et un mélange de ces composants. Plus préférentiellement, le composant oxydant est l'air.

De manière préférée, le plasma 42 est généré à partir d'air et d'azote. Par « généré à partir d'air et d'azote », on entend que le gaz utilisé pour générer le plasma ne comprend que de l'air, éventuellement dilué par de l'azote, sans ajout d'aucun autre additif.

Par « air », on entend ce terme dans son acception commune, c'est-à-dire un mélange d'azote majoritaire, de l'ordre de 78% molaire, de l'ordre de 21% d'oxygène, le complément étant un mélange de gaz tels que par exemple l'argon et le dioxyde de carbone. De manière préférée, le gaz est un gaz filtré.

La filtration du gaz permet de capter d'éventuels corps indésirables, tels que de fines gouttelettes d'huile. Une pratique conventionnelle consiste à utiliser un filtre d'un micromètre.

De manière préférée, le gaz, préférentiellement de l'air éventuellement dilué par de l'azote, utilisé pour la génération du plasma atmosphérique est exempt de composés organiques, ou en contient moins de 1% volumique, préférentiellement moins de 0,5% volumique, très préférentiellement moins de 0,1% volumique.

De manière préférée, le gaz, préférentiellement de l'air éventuellement dilué par de l'azote, utilisé pour la génération du plasma atmosphérique est exempt de composés halogénés, ou en contient moins de 1% volumique, préférentiellement moins de 0,5% volumique, très préférentiellement moins de 0,1% volumique.

Ici, le flux 42 est obtenu à partir d'un mélange d'air et d'azote à un débit allant de 1000 l/min à 3000 l/min, préférentiellement de 1500 l/min à 2000 l/min.

L'orifice 52 est disposé en regard de l'élément R à traiter, ici en regard de la surface S1.

L'orifice 52 est situé à une distance constante h de la surface S1. De préférence, cette distance va de 5 à 25 mm, de préférence de 10 à 20 mm, de manière préférée de 10 à 15 mm. Plus la distance est importante, et plus la puissance nécessaire requise pour obtenir une baisse de la cristallinité donnée est importante. En dessous de 10 mm, le contrôle de l'amorphisation de l'élément PET devient très délicate et les vitesses de défilement nécessaires deviennent très élevées. Le risque de détruire l'élément PET devient plus important.

On fait défiler l'élément R par rapport au flux de plasma à une vitesse moyenne v inférieure ou égale à 100 mètres par minutes, de préférence à 50 mètres par minutes et plus préférentiellement à 30 mètres par minutes. La vitesse moyenne v est égale au rapport de la distance parcourue par le flux de plasma 42 par rapport à la surface à exposer sur une durée prédéterminée mise pour parcourir cette distance. Le déplacement du flux par rapport à l'élément R peut être rectiligne ou courbe ou un mélange des deux. Par exemple, le flux de plasma peut avoir un mouvement en boustrophédon par rapport à l'élément R de façon à exposer l'ensemble de la surface S1.

Le faisceau de plasma 42 présente un diamètre d. Ainsi, pour une puissance du plasma P (puissance consommée pour produire le plasma), une vitesse moyenne de défilement de l'élément PET par rapport au flux de plasma v et un diamètre de faisceau d, l'élément PET reçoit une puissance apparente Pₐₚₚ égale à Pₐₚₚ= P×d/(v×h), avec P la puissance du plasma en Watt, d le diamètre du faisceau de plasma mesuré au niveau de la surface de l'élément PET en mètre, v la vitesse de défilement de l'élément PET par rapport au flux de plasma en mètre/minute et h la distance entre la buse plasma et la surface l'élément PET en mètre. Le diamètre d est mesuré à partir de la largeur de la trace laissée après un premier passage du plasma à une distance h d'une plaque de PET vierge.

Il a été découvert que, pour abaisser suffisamment la cristallinité de l'élément PET sans risquer d'endommager sa structure, permettant ainsi d'obtenir de bonnes performances de dépolymérisation, il faut que la puissance apparente du plasma soit telle que 100×e ≤ Pₐₚₚ ≤ 330×e. Si la puissance apparente est trop importante, l'élément PET est exposé trop en profondeur et le risque de l'endommager et de réduire les performances de la dépolymérisation sont accrus. Si la puissance apparente est trop faible, l'abaissement de la cristallinité est insuffisant pour permettre d'obtenir une dépolymérisation enzymatique satisfaisante.

Par « suffisamment », on entend que la cristallinité de l'élément PET est, suite à l'étape d'amorphisation, inférieure à 25%, de préférence inférieure à 20%, et de manière très préférée inférieure à 15%. En effet, de tels niveaux de cristallinité permettent une dépolymérisation correcte du PET, notamment par voie enzymatique.

### Étape de dépolymérisation

Suite à l'étape d'amorphisation, l'élément PET peut donc être traité dans une étape de dépolymérisation.

De préférence, l'étape de dépolymérisation est une étape de dépolymérisation enzymatique. Au cours de cette étape, l'élément PET est mis en contact avec une ou plusieurs enzymes permettant la dépolymérisation du PET (dépolymérases). Une telle étape de dépolymérisation enzymatique est connue de l'homme du métier, et décrite par exemple dans le document WO2017/198786.

L'élément PET traité dans les conditions du procédé selon l'invention présente une excellente capacité à être dépolymérisé, que cette dépolymérisation soit conduite de manière chimique ou, préférentiellement, de manière enzymatique.

L'étape de dépolymérisation est préférentiellement conduite à une température allant de 20 à 90°C en phase liquide, à un pH allant de 7 à 9. De manière préférée, la phase liquide est maintenue sous agitation afin d'améliorer la mise en contact du PET et des enzymes dépolymérases.

L'invention concerne également un élément en polyéthylène téréphtalate susceptible d'être obtenu par un procédé de préparation selon l'invention. Au-delà de son taux de cristallinité, il est apparu qu'un tel élément présentait une excellente dégradabilité lorsqu'il était utilisé dans un procédé de dépolymérisation, en particulier enzymatique.

### Exemples

### Mesure du taux de cristallinité

On mesure le taux de cristallinité Ti moyen de l'élément PET par analyse enthalpique différentielle.

On effectue pour cela l'acquisition du spectre selon la norme ASTM D3418. Puis, on mesure l'aire A1, A2 respectivement de chaque pic de cristallisation et de fusion. Le taux de cristallinité T est donné par la relation T=(A2-A1)/(ΔH*.G) dans laquelle ΔH* est la chaleur spécifique de fusion du polyester 100% cristallin exprimé en J.g⁻¹ (ΔH*=145 J/g), et G le gradient de température pendant l'analyse enthalpique différentielle exprimé en K.s⁻¹.

### Évaluation du traitement d'amorphisation

Différents éléments en PET sont traités dans les conditions présentées dans le tableau 1. On mesure la cristallinité de l'élément PET après son traitement par analyse enthalpique différentielle. Une cristallinité inférieure à 20% permettra d'obtenir une bonne dépolymérisation de l'élément dans un procédé de dépolymérisation tel que celui décrit dans le document WO2017/198786, à savoir une dégradation de plus de 40% en masse de l'élément après une durée de traitement de 7h. Lorsque l'élément PET est trop endommagé pour subir un traitement enzymatique (élément brûlé, fortement déformé), la cristallinité n'est pas mesurée et on utilise la notation « - ». Cet élément ne pourra pas être utilisé dans un traitement de dépolymérisation.

**[Tableau 1]**

| épaisseur e | puissance P | distance torche/matériau h | ø Spot d | Vitesse v | 100.e | (P*d)/(v*h) | 330.e | Cristallinité |
|---|---|---|---|---|---|---|---|---|
| *mm* | *W* | m | *mm* | *m*/*min* | | | | % |
| 0.27 | 1000 | 0.015 | 4 | 25 | 27 | 10.7 | 89.1 | 23.6 |
| 0.27 | 1000 | 0.015 | 4 | 5 | 27.0 | 53.3 | 89.1 | 17.4 |
| 0.27 | 1000 | 0.015 | 4 | 3 | 27.0 | 88.9 | 89.1 | 16.5 |
| 0.27 | 1000 | 0.01 | 2.7 | 5 | 27.0 | 54.0 | 89.1 | 12.1 |
| 0.27 | 1000 | 0.01 | 2.7 | 3 | 27.0 | 90.0 | 89.1 | - |
| 0.38 | 1000 | 0.015 | 4 | 3 | 38.0 | 88.9 | 125.4 | 15.0 |
| 0.38 | 1000 | 0.015 | 4 | 2 | 38.0 | 133.3 | 125.4 | - |
| 0.38 | 1000 | 0.015 | 4 | 5 | 38.0 | 53.3 | 125.4 | 19.0 |
| 0.38 | 1000 | 0.015 | 4 | 15 | 38.0 | 17.8 | 125.4 | 28.1 |
| 0.38 | 1000 | 0.015 | 4 | 25 | 38.0 | 10.7 | 125.4 | 33.0 |
| 0.38 | 1000 | 0.01 | 2.7 | 5 | 38.0 | 54.0 | 125.4 | 15.9 |
| 0.38 | 1000 | 0.01 | 2.7 | 3 | 38.0 | 90.0 | 125.4 | 11.5 |
| 0.018 | 1000 | 0.01 | 2.7 | 100 | 1.8 | 2.7 | 5.9 | 10.9 |
| 0.018 | 1000 | 0.01 | 2.7 | 50 | 1.8 | 5.4 | 5.9 | 8.3 |
| 0.018 | 1000 | 0.01 | 2.7 | 10 | 1.8 | 27.0 | 5.9 | - |

## Revendications

1. Procédé de préparation d'un élément en polyéthylène téréphtalate, dit « PET », pour sa dépolymérisation comprenant au moins une étape d'amorphisation dans laquelle la surface de l'élément PET est mise au contact d'un plasma, suivie d'une étape de dépolymérisation de l'élément PET, la puissance apparente du plasma Pₐₚₚ=P×d/(v×h), avec P la puissance du plasma en Watt, d le diamètre du faisceau de plasma mesuré au niveau de la surface de l'élément PET en mètre, v la vitesse de défilement de l'élément PET par rapport au flux de plasma en mètre/minute et h la distance entre la buse plasma et la surface l'élément PET en mètre étant telle que 100×e ≤ Pₐₚₚ ≤ 330×e, avec e l'épaisseur de l'élément PET en millimètre.

2. Procédé de préparation selon la revendication précédente dans lequel le plasma est généré à partir d'air et d'azote.

3. Procédé de préparation selon l'une quelconque des revendications précédentes dans lequel le débit de plasma va de 1000 l/min à 3000 l/min, préférentiellement de 1500 l/min à 2000 l/min.

4. Procédé de préparation selon l'une quelconque des revendications précédentes dans lequel la distance h va de 5 à 25 mm, préférentiellement de 10 à 20 mm, de préférence de 10 à 15 mm.

5. Procédé de préparation selon l'une quelconque des revendications précédentes dans lequel la vitesse v est inférieure ou égale à 100 mètres par minute, de préférence à 50 mètres par minute et plus préférentiellement à 30 mètres par minute.

6. Procédé de préparation selon l'une quelconque des revendications précédentes dans lequel l'étape de dépolymérisation est une étape de dépolymérisation enzymatique.

7. Procédé de préparation selon l'une quelconque des revendications précédentes dans lequel l'élément PET est un monofilament, chaque monofilament présentant, de préférence, un diamètre inférieur ou égal à 50 µm.

8. Procédé de préparation selon l'une quelconque des revendications 1 à 7 dans lequel l'élément PET comprend une ou plusieurs fibres multifilamentaires.

9. Procédé de préparation selon l'une quelconque des revendications 1 à 7 dans lequel l'élément PET comprend un tissu de fibres.

10. Procédé de préparation selon l'une quelconque des revendications 1 à 7 dans lequel l'élément PET comprend un film.

11. Procédé de préparation selon l'une quelconque des revendications 1 à 7 dans lequel l'élément PET comprend un intissé.

12. Procédé de préparation selon l'une quelconque des revendications précédentes dans lequel l'élément PET comprend une première partie en polyester et une deuxième partie en un matériau différent de celui de la première partie.

13. Procédé de préparation selon la revendication précédente dans lequel le matériau de la deuxième partie est choisi parmi un polyester, un polyamide, une polycétone, une polyoléfine, une cellulose, une fibre naturelle ou un mélange de ces matériaux.

## Patentansprüche

1. Verfahren zur Herstellung eines Elements aus als PET bezeichnetem Polyethylenterephthalat zur Depolymerisation, das mindestens einen Amorphisierungsschritt umfasst, bei dem die Oberfläche des PET-Elements mit einem Plasma in Kontakt gebracht wird, gefolgt von einem Schritt zur Depolymerisation des PET-Elements, wobei die Scheinleistung des Plasmas P_{schein}=Pxd/ (vxh) beträgt, wobei P die Leistung des Plasmas in Watt ist, d der Durchmesser des Plasmastrahls, gemessen an der Oberfläche des PET-Elements, in Metern ist, v die Vorbeibewegungsgeschwindigkeit des PET-Elements bezogen auf den Plasmafluss in Meter/Minute ist und h der Abstand zwischen der Plasmadüse und der Oberfläche des PET-Elements in Metern ist, sodass 100xe ≤ P_{schein} ≤ 330xe, wobei e die Dicke des PET-Elements in Millimetern ist.

2. Verfahren zur Herstellung nach dem vorhergehenden Anspruch, wobei das Plasma aus Luft und Stickstoff erzeugt wird.

3. Verfahren zur Herstellung nach einem der vorhergehenden Ansprüche, wobei der Plasmavolumenstrom im Bereich von 1000 l/min bis 3000 l/min, bevorzugt von 1500 l/min bis 2000 l/min liegt.

4. Verfahren zur Herstellung nach einem der vorhergehenden Ansprüche, wobei der Abstand h im Bereich von 5 bis 25 mm, bevorzugt von 10 bis 20 mm, vorzugsweise von 10 bis 15 mm liegt.

5. Verfahren zur Herstellung nach einem der vorhergehenden Ansprüche, wobei die Geschwindigkeit v kleiner oder gleich 100 Meter pro Minute, vorzugsweise kleiner oder gleich 50 Meter pro Minute und bevorzugter kleiner oder gleich 30 Meter pro Minute beträgt.

6. Verfahren zur Herstellung nach einem der vorhergehenden Ansprüche, wobei der Schritt zur Depolymerisation ein Schritt zur enzymatischen Depolymerisation ist.

7. Verfahren zur Herstellung nach einem der vorhergehenden Ansprüche, wobei das PET-Element ein Monofilament ist, wobei jedes Monofilament vorzugsweise einen Durchmesser kleiner oder gleich 50 µm aufweist.

8. Verfahren zur Herstellung nach einem der Ansprüche 1 bis 7, wobei das PET-Element eine oder mehrere Multifilamentfasern umfasst.

9. Verfahren zur Herstellung nach einem der Ansprüche 1 bis 7, wobei das PET-Element ein Fasergewebe umfasst.

10. Verfahren zur Herstellung nach einem der Ansprüche 1 bis 7, wobei das PET-Element eine Folie umfasst.

11. Verfahren zur Herstellung nach einem der Ansprüche 1 bis 7, wobei das PET-Element ein Vlies umfasst.

12. Verfahren zur Herstellung nach einem der vorhergehenden Ansprüche, wobei das PET-Element einen ersten Abschnitt aus Polyester und einen zweiten Abschnitt aus einem anderen Werkstoff als dem von dem ersten Abschnitt umfasst.

13. Verfahren zur Herstellung nach dem vorhergehenden Anspruch, wobei das Material des zweiten Abschnitts aus einem Polyester, einem Polyamid, einem Polyketon, einem Polyolefin, einer Cellulose, einer Naturfaser oder einer Mischung aus diesen Materialien ausgewählt ist.

## Claims

1. Process for preparing an element made of polyethylene terephthalate, known as PET, for the depolymerization thereof comprising at least a step of amorphization in which the surface of the PET element is brought into contact with a plasma, followed by a step of depolymerization of the PET element, the apparent power of the plasma Pₐₚₚ=P×d/(v×h), where P is the plasma power in watts, d is the diameter of the plasma beam measured at the surface of the PET element in metres, v is the run speed of the PET element relative to the plasma flow in metres/minute and h is the distance between the plasma nozzle and the surface of the PET element in metres, being such that 100×e ≤ Pₐₚₚ ≤ 330×e, where e is the thickness of the PET element in millimetres.

2. Preparation process according to the preceding claim, in which the plasma is generated from air and nitrogen.

3. Preparation process according to either one of the preceding claims, in which the plasma flow rate ranges from 1000 l/min to 3000 l/min, preferentially from 1500 l/min to 2000 l/min.

4. Preparation process according to any one of the preceding claims, in which the distance h ranges from 5 to 25 mm, preferentially from 10 to 20 mm, preferably from 10 to 15 mm.

5. Preparation process according to any one of the preceding claims, in which the speed v is less than or equal to 100 metres per minute, preferably less than or equal to 50 metres per minute and more preferentially less than or equal to 30 metres per minute.

6. Preparation process according to any one of the preceding claims, in which the depolymerization step is an enzymatic depolymerization step.

7. Preparation process according to any one of the preceding claims, in which the PET element is a monofilament, each monofilament preferably having a diameter of less than or equal to 50 µm.

8. Preparation process according to any one of Claims 1 to 7, in which the PET element comprises one or more multifilament fibres.

9. Preparation process according to any one of Claims 1 to 7, in which the PET element comprises a fibre fabric.

10. Preparation process according to any one of Claims 1 to 7, in which the PET element comprises a film.

11. Preparation process according to any one of Claims 1 to 7, in which the PET element comprises a nonwoven fabric.

12. Preparation process according to any one of the preceding claims, in which the PET element comprises a first part made of polyester and a second part made of a material different from that of the first part.

13. Preparation process according to the preceding claim, in which the material of the second part is chosen from a polyester, a polyamide, a polyketone, a polyolefin, a cellulose, a natural fibre or a mixture of these materials.
